# EUROPEAN PATENT APPLICATION

(11) **EP 4 501 677 A1**
(43) Date of publication of application: **05.02.2025**
(21) Application number: 23779857.4
(22) Date of filing: 20.03.2023
(51) Int. Cl.: B60K 11/06, B60K 1/02, B60K 1/04, B66F 9/075

(54) **INDUSTRIAL VEHICLE**

(30) Priority: 30.03.2022 JP 2022057417
(71) Applicant: KABUSHIKI KAISHA TOYOTA JIDOSHOKKI, Kariya-shi, Aichi 448-8671 (JP)
(72) Inventor: FUJIOKA, Kumiko, Kariya-shi, Aichi 448-8671 (JP)
(74) Representative: TBK
(86) International application number: PCT/JP2023/010960
(87) International publication number: WO 2023/189841

(57) **Abstract**

In a forklift (10), a battery (40) is arranged rearward from a cabin (28) in the rear portion of a vehicle main body (21). A motor controller (33) is arranged frontward from the battery (40). A traction motor (30) and a material-handling motor (32) are arranged frontward from a cooling fan (50). The cooling fan (50) discharges a wind, flowing from the front to the rear of the vehicle main body (21), to the rear of the traction motor (30) and the material-handling motor (32).

## Description

### TECHNICAL FIELD

The present invention relates to an industrial vehicle.

### BACKGROUND ART

Patent Literature 1 discloses a battery-powered forklift. The battery-powered forklift of Patent Literature 1 includes a vehicle body, a traction electric motor, a material-handling electric motor, a battery, and a controller that controls the traction electric motor and the material-handling electric motor. The vehicle body includes an accommodation space. The accommodation space accommodates the material-handling electric motor, which is an example of a heating element, and the controller. Further, the battery-powered forklift includes a fan that discharges air from the accommodation space. The fan is arranged in a side portion of the vehicle body. The fan discharges the air in the accommodation space out of the vehicle body. Accordingly, heat generated in the material-handling electric motor and the controller is also discharged out of the vehicle body. This restricts an excessive rise in temperature of the accommodation space.

### CITATION LIST

### Patent Literature

Patent Literature 1: International Patent Publication No. WO2014/109000

### SUMMARY OF INVENTION

### Technical Problem

It is desired that an industrial vehicle, in which a heating element is accommodated as in the battery-powered forklift disclosed in Patent Literature 1, improve the cooling efficiency of the heating element.

### Solution to Problem

In a first aspect of the present invention, an industrial vehicle is provided. The industrial vehicle includes a vehicle main body into which a wind is drawn from a front, a cabin arranged on the vehicle main body, a material-handling device arranged in a front portion of the vehicle main body, a material-handling motor arranged inside the vehicle main body, below the cabin, a traction motor arranged inside the vehicle main body, below the cabin, a motor controller arranged inside the vehicle main body, below the cabin, the motor controller controlling the material-handling motor and the traction motor, a battery serving as a power source for the material-handling motor and the traction motor, and a cooling fan arranged inside the vehicle main body. The battery is arranged rearward from the cabin in a rear portion of the vehicle main body. The motor controller is arranged frontward from the battery. The material-handling motor and the traction motor are arranged frontward from the cooling fan. The cooling fan discharges the wind, flowing from the front to a rear of the vehicle main body, to a rear of the material-handling motor and the traction motor.

### BRIEF DESCRIPTION OF DRAWINGS

Fig 1 is a side view showing a forklift according to one embodiment.
Fig. 2 is a cross-sectional view schematically showing the forklift.
Fig. 3 is a partial cross-sectional plan view schematically showing the inside of the forklift.
Fig. 4 is a front view schematically showing the forklift.
Fig. 5 is a partial perspective view schematically showing an accommodation space and a cooling fan.

### DESCRIPTION OF EMBODIMENTS

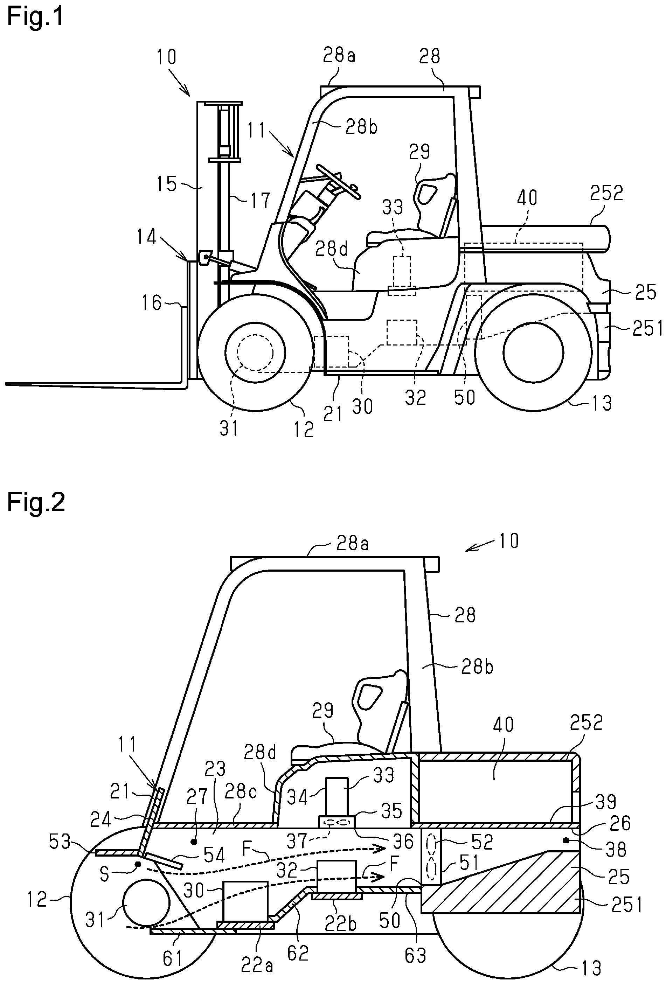

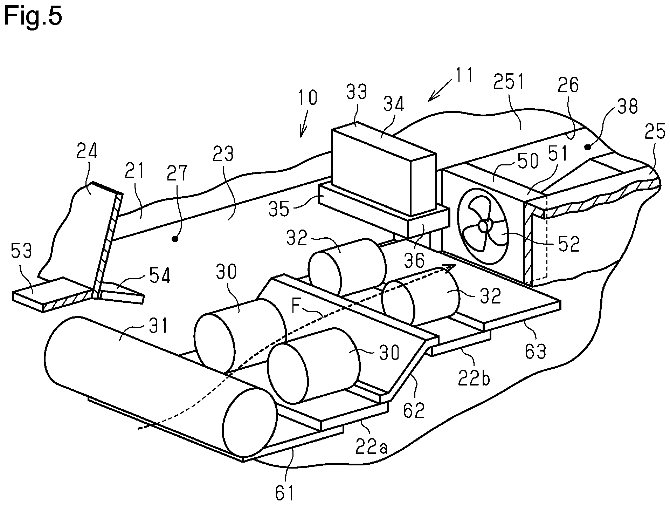

An industrial vehicle according to one embodiment will now be described with reference to Figs. 1 to 5. In this embodiment, the industrial vehicle is a forklift. In the following, the direction in which an operator of the forklift faces in the forward direction (advancing direction) of the vehicle is defined as a forward direction. The backward, leftward, rightward, upward, and downward directions are defined with reference to the forward direction.

### General Structure of Forklift

As shown in Figs. 1 and 2, a forklift 10, serving as an industrial vehicle, includes a vehicle body 11, drive wheels 12, steered wheels 13, and a material-handling device 14. The forklift 10 further includes traction motors 30 that drive the drive wheels 12, a power transmission device 31, material-handling motors 32 that drive the material-handling device 14, and a motor controller 33 that controls the traction motors 30 and the material-handling motors 32. The forklift 10 includes a battery 40 serving as a power source for the traction motors 30 and the material-handling motors 32.

### Vehicle Body

The vehicle body 11 includes a vehicle main body 21 and a cabin 28, which serves as a driver's compartment arranged on the vehicle main body 21. A front-rear direction is the front-rear direction of the vehicle body 11, and a left-right direction is the vehicle width direction of the vehicle body 11.

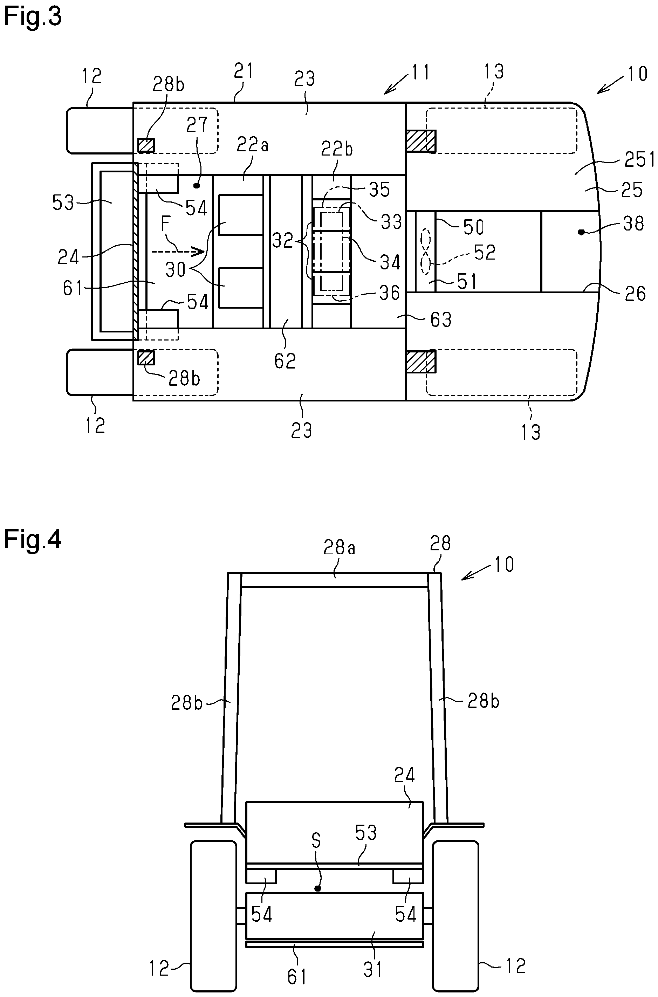

As shown in Figs. 2 and 3, the vehicle main body 21 includes a first bottom portion 22a, a second bottom portion 22b, two side portions 23, a front partition plate 24, and a counterweight 25. The two side portions 23 are spaced apart from each other in the left-right direction. The two side portions 23 are arranged frontward from the counterweight 25. The first bottom portion 22a and the second bottom portion 22b each extend between the lower portions of the two side portions 23. The front partition plate 24 extends between the front portions of the two side portions 23. The front partition plate 24 forms part of the front end of the vehicle main body 21. The front partition plate 24 is arranged in front of and above the first bottom portion 22a.

The first bottom portion 22a and the second bottom portion 22b are spaced apart from each other in the front-rear direction. The first bottom portion 22a is spaced rearward from the front end of the vehicle main body 21. The second bottom portion 22b is spaced rearward from the rear end of the first bottom portion 22a. The second bottom portion 22b is located at a position spaced frontward from the front end of the counterweight 25. The first bottom portion 22a is arranged downward from the second bottom portion 22b. Thus, the second bottom portion 22b is arranged upward from the first bottom portion 22a.

As shown in Fig. 4, the power transmission device 31 is arranged below the front partition plate 24. In the vertical direction, a gap S is formed between the front partition plate 24 and the power transmission device 31.

### Traction Motors, Material-Handling Motors, and Motor Controller

As shown in Figs. 2, 3, and 5, the traction motors 30 are fixed to the upper surface of the first bottom portion 22a. Two traction motors 30 are fixed to the first bottom portion 22a. However, the quantity of the traction motors 30 may be changed. The two traction motors 30 are arranged in the left-right direction. The material-handling motors 32 are fixed to the upper surface of the second bottom portion 22b. Two material-handling motors 32 are fixed to the second bottom portion 22b. However, the quantity of the material-handling motors 32 may be changed. The two material-handling motors 32 are arranged in the left-right direction.

The motor controller 33 includes a control unit 34 that controls driving of the traction motors 30 and the material-handling motors 32, and a fan 35 that cools the control unit 34. The control unit 34 is arranged upward from the fan 35. The fan 35 includes a frame-shaped case 36 and blade members 37 accommodated in the case 36. The case 36 is open in the vertical direction. In other words, the case 36 is open to the control unit 34 and downward. The fan 35 sends air downward from the case 36 as the blade members 37 rotate. Further, the fan 35 discharges heat, generated in the control unit 34, downward as the blade members 37 rotate.

The motor controller 33 is fixed to the upper portion of the vehicle main body 21 by a bracket (not shown). The motor controller 33 is arranged upward from the material-handling motors 32. The fan 35 is spaced upward from the material-handling motors 32.

### Accommodation Space

The first bottom portion 22a, the second bottom portion 22b, the two side portions 23, the front partition plate 24, and the counterweight 25 define an accommodation space 27 inside the vehicle main body 21. The accommodation space 27 extends in the front-rear direction of the vehicle body 11. Thus, the traction motors 30 fixed to the upper surface of the first bottom portion 22a and the material-handling motors 32 fixed to the upper surface of the second bottom portion 22b are accommodated in the accommodation space 27. The fan 35 of the motor controller 33 faces the accommodation space 27.

The accommodation space 27 is connected to the outside of the vehicle body 11 through the gap S defined at the front end of the vehicle main body 21. Thus, the accommodation space 27 is open at the front end of the vehicle main body 21. When the forklift 10 travels, a wind is drawn into the accommodation space 27 inside the vehicle main body 21 through the gap S. In other words, the wind is drawn into the inside from the front of the vehicle main body 21.

The wind, drawn into the accommodation space 27, flows through the accommodation space 27 to come into contact with the traction motors 30 and the material-handling motors 32. Thus, heat generated in the traction motors 30 and the material-handling motors 32 is discharged to the wind, and the traction motors 30 and the material-handling motors 32 are cooled. In addition, the fan 35 discharges heat, generated in the control unit 34, toward the wind flowing through the accommodation space 27. Thus, the control unit 34 of the motor controller 33 is cooled.

### Material-Handling Device

As shown in Fig. 1, the material-handling device 14 is arranged in the front portion of the vehicle main body 21. The material-handling device 14 includes a mast 15 extending upright in the front portion of the vehicle main body 21, two forks 16 arranged to be raised or lowered together with the mast 15, and a lift cylinder 17 that raises or lowers the mast 15. A material is placed on the forks 16. The lift cylinder 17 is a hydraulic cylinder. When the lift cylinder 17 extends or contracts to raise or lower the mast 15, the forks 16 are raised or lowered accordingly. The material-handling device 14 is driven by the material-handling motors 32.

### Counterweight

As shown in Figs. 2, 3, and 5, the counterweight 25 is a weight for counterbalancing when the material-handling device 14 is loaded with material. The counterweight 25 is arranged upward from the steered wheels 13. The counterweight 25 includes a weight body 251 and a weight cover 252.

The weight body 251 defines a duct forming portion 26 extending in the front-rear direction. The duct forming portion 26 is recessed from the upper surface of the weight body 251. The duct forming portion 26 is defined between the opposite sides of the weight body 251 in the left-right direction. The duct forming portion 26 extends in the front-rear direction of the weight body 251, and has a width in the left-right direction. The duct forming portion 26 is open at the rear end surface of the vehicle main body 21. The duct forming portion 26 is connected to the rear end of the accommodation space 27. Thus, a wind flowing through the accommodation space 27 flows into the duct forming portion 26. The duct forming portion 26 is connected to the outside of the vehicle body 11 through the accommodation space 27.

The forklift 10 may include a heat transfer member 39. The heat transfer member 39 is arranged on the upper surface of the weight body 251. The heat transfer member 39 is in contact with the upper surface of the weight body 251. The heat transfer member 39 is formed by a metal plate.

### Battery

The battery 40 is placed on the upper surface of the heat transfer member 39. As described above, the counterweight 25 is arranged in the rear portion of the vehicle main body 21. The battery 40 arranged above the upper surface of the counterweight 25 is arranged in the rear portion of the vehicle main body 21.

The battery 40 is in contact with the heat transfer member 39. The heat transfer member 39 transfers heat generated in the battery 40 to the weight body 251. Thus, the heat transfer member 39 is preferably made of metal having a high thermal conductivity. The weight cover 252 covers the battery 40 from above.

The duct forming portion 26 is covered from above by the heat transfer member 39. The duct forming portion 26 of the weight body 251 and the heat transfer member 39 define a duct 38. Thus, the duct 38 is a space closed in the vertical direction and the left-right direction. However, in the structures of the counterweight 25, the vehicle main body 21, and the heat transfer member 39, the duct 38 has a slight gap connected to the outside. The duct 38 is connected to the accommodation space 27 and is open to the outside of the vehicle body 11 at the rear end surface of the vehicle body 11. Thus, a wind, drawn into the accommodation space 27, flows through the duct 38 and is discharged out of the vehicle body 11.

### Cabin

As shown in Figs. 1 and 2, the cabin 28 includes a top plate 28a, two side frames 28b, a bottom plate 28c, and a seat base 28d. The cabin 28 extends upward from the upper surface of the vehicle main body 21. Although only one of the side frames 28b is shown, the two side frames 28b are arranged at the opposite sides of the vehicle main body 21 in the left-right direction. The bottom plate 28c is arranged on the upper surface of the vehicle main body 21. The accommodation space 27 is covered from above by a bottom plate 28c of the cabin 28. The seat base 28d is arranged on the upper surface of the bottom plate 28c. The seat base 28d covers the motor controller 33 from above and from the side. A driver seat 29 is fixed to the upper surface of the seat base 28d.

Thus, the traction motors 30 and the material-handling motors 32 accommodated in the accommodation space 27 are arranged inside the vehicle main body 21, below the cabin 28. The motor controller 33 is arranged inside the vehicle main body 21, below the cabin 28, and is arranged frontward from the battery 40. The battery 40 is arranged rearward from the cabin 28 in the rear portion of the vehicle main body 21.

### Details of Forklift

The forklift 10 includes a cooling fan 50. The forklift 10 may include an intake regulating plate 53 and a guide regulating plate 54. The forklift 10 may also include a first lower cover 61, a second lower cover 62, and a third lower cover 63.

### Cooling Fan

As shown in Figs. 2, 3, and 5, the cooling fan 50 is arranged in the duct 38. The duct 38 is formed by the duct forming portion 26 of the counterweight 25. As described above, the counterweight 25 is arranged in the rear portion of the vehicle main body 21. Thus, the cooling fan 50 arranged in the duct 38 is located in the rear portion of the vehicle main body 21 and inside the vehicle main body 21. Thus, the forklift 10 includes the cooling fan 50 arranged inside the vehicle main body 21.

The duct 38 is arranged rearward from the accommodation space 27. The cooling fan 50 is arranged in the duct 38. Thus, the accommodation space 27 extends inside the vehicle main body 21 from the front end of the vehicle main body 21 to the cooling fan 50. Thus, the accommodation space 27 extending from the front end of the vehicle main body 21 to the cooling fan 50 is defined inside the vehicle main body 21.

The cooling fan 50 is arranged near the front end of the duct 38. The cooling fan 50 is arranged rearward from the material-handling motors 32. The traction motors 30 are arranged frontward from the material-handling motors 32. Thus, the traction motors 30 and the material-handling motors 32 are arranged frontward from the cooling fan 50.

The cooling fan 50 is located in the flow of a wind flowing from the front to the rear of the vehicle main body 21. A direction in which the wind flows from the front to the rear of the vehicle main body 21 is referred to as a flow direction F. The cooling fan 50 is arranged downstream from the traction motors 30 and the material-handling motors 32 in the flow direction F. The cooling fan 50 is arranged downstream from the motor controller 33.

The cooling fan 50 includes a frame-shaped case 51 and blade members 52 accommodated in the case 51. The case 51 is open in the front-rear direction. In other words, the case 51 is open to the accommodation space 27 and to the duct 38. The cooling fan 50 discharges air rearward from the case 51 as the blade members 52 rotate. The cooling fan 50 discharges a wind, flowing from the front to the rear of the vehicle main body 21, rearward from the material-handling motors 32 and the traction motors 30 as the blade members 52 rotate. The cooling fan 50 draws in air from the accommodation space 27 and discharges the air to the duct 38.

### Intake Regulating Plate and Guide Regulating Plate

The intake regulating plate 53 is arranged at the front end of the vehicle main body 21. The intake regulating plate 53 projects from the lower end of the front partition plate 24 to the front of the vehicle main body 21. When the vehicle main body 21 is viewed from one side in the left-right direction, the intake regulating plate 53 extends substantially horizontally frontward from the front partition plate 24. The intake regulating plate 53 allows a wind to be drawn into the vehicle main body 21.

As shown in Fig. 4, the intake regulating plate 53 extends in the left-right direction of the front partition plate 24. The intake regulating plate 53 is arranged upward from the power transmission device 31 and upward from the gap S.

As shown in Figs. 2, 3, and 5, two guide regulating plates 54 are arranged on the vehicle main body 21. One guide regulating plate 54 is arranged on one side portion 23, and the other guide regulating plate 54 is arranged on the other side portion 23. The guide regulating plates 54 are each arranged in the front portions of the side portions 23 and rearward from the front partition plate 24. Further, the guide regulating plates 54 are each arranged in the upper portion of the side portions 23. The two guide regulating plates 54 are opposed to each other in the left-right direction. The guide regulating plates 54 are each arranged upward from the traction motors 30.

The two guide regulating plates 54 are accommodated in the accommodation space 27. Thus, the guide regulating plates 54 are arranged inside the vehicle main body 21, below the cabin 28. When the vehicle main body 21 is viewed from one side in the left-right direction, the guide regulating plates 54 each extend downward in an inclined manner from the front end to the rear end. Inside the vehicle main body 21, the guide regulating plates 54 direct a wind to the traction motors 30 to cool the traction motors 30, and guide the wind toward the cooling fan 50. In other words, the guide regulating plates 54 restrict upward diffusion of the wind drawn into the vehicle main body 21.

### First Lower Cover, Second Lower Cover, and Third Lower Cover

The first lower cover 61 is arranged in the front portion of the vehicle main body 21. The first lower cover 61 is rectangular. The first lower cover 61 extends in the front-rear direction. The width of the first lower cover 61 extends in the left-right direction.

The first lower cover 61 covers an area between the front end of the vehicle main body 21 and the first bottom portion 22a from below. Thus, the first lower cover 61 defines the accommodation space 27 from below. The first lower cover 61 is arranged below the power transmission device 31 and the traction motors 30. The first lower cover 61 may be arranged in any manner as long as the first lower cover 61 is arranged below the traction motors 30 and covers the area between the front end of the vehicle main body 21 and the first bottom portion 22a from below.

The second lower cover 62 is arranged between the first bottom portion 22a and the second bottom portion 22b. The second lower cover 62 extends between the first bottom portion 22a and the second bottom portion 22b. The second lower cover 62 covers an area between the first bottom portion 22a and the second bottom portion 22b. The second lower cover 62 is joined to the first bottom portion 22a and the second bottom portion 22b. Thus, the second lower cover 62 defines the accommodation space 27 from below. The second lower cover 62 may be joined in any manner at any position as long as the second lower cover 62 extends between the first bottom portion 22a and the second bottom portion 22b and covers the area between the first bottom portion 22a and the second bottom portion 22b.

The second lower cover 62 is inclined upward from the first bottom portion 22a to the second bottom portion 22b. In other words, the second lower cover 62 is inclined upward from the traction motors 30 toward the material-handling motors 32. The second bottom portion 22b is arranged frontward from the cooling fan 50. Thus, the second lower cover 62 is inclined upward toward the cooling fan 50 as the second lower cover 62 extends from the front end to the rear end. The second lower cover 62 is located between the front end of the vehicle main body 21 and the cooling fan 50. Thus, the second lower cover 62 is an inclined portion located between the front end of the vehicle main body 21 and the cooling fan 50.

The third lower cover 63 is arranged between the second bottom portion 22b and the counterweight 25. The third lower cover 63 extends between the second bottom portion 22b and the counterweight 25. The third lower cover 63 covers an area between the second bottom portion 22b and the counterweight 25. The third lower cover 63 is joined to the second bottom portion 22b and the counterweight 25. Thus, the third lower cover 63 defines the accommodation space 27 from below. The third lower cover 63 may be joined in any manner at any position as long as the third lower cover 63 covers the area between the second bottom portion 22b and the counterweight 25.

The first lower cover 61, the second lower cover 62, and the third lower cover 63 each define the accommodation space 27 together with the first bottom portion 22a and the second bottom portion 22b. In other words, the first lower cover 61, the second lower cover 62, and the third lower cover 63 each fill portions of the accommodation space 27 that are open downward. In other words, the forklift 10 includes the first to third lower covers 61 to 63 that cover the accommodation space 27 from below.

Thus, the accommodation space 27 is closed from above by the bottom plate 28c of the cabin 28 and is closed from below by the first to third lower covers 61 to 63. Although there is a slight gap in the structure of the forklift 10, the accommodation space 27 is a closed space.

### Operation of Embodiment

When the forklift 10 travels, the cooling fan 50 is driven in conjunction with the traction motors 30. The cooling fan 50 draws in air from the accommodation space 27 and discharges the air to the duct 38.

When the forklift 10 travels, a wind is drawn into the inside from the front of the vehicle main body 21 through the gap S and the like. In this case, the intake regulating plate 53 allows the wind to easily flow toward the gap S.

Inside the vehicle main body 21, the guide regulating plates 54 direct part of a wind, flowing into the vehicle main body 21, to the traction motors 30 to cool the traction motors 30 and guide the wind toward the cooling fan 50. Inside the vehicle body 11, the cooling fan 50 draws in air from the accommodation space 27 and discharges the air to the duct 38. Thus, the cooling fan 50 increases the speed of the wind flowing into the accommodation space 27. The wind having an increased speed comes into contact with the traction motors 30, the material-handling motors 32, and the motor controller 33. Then the wind passes through the cooling fan 50 and is discharged to the duct 38.

The first lower cover 61 guides the wind, flowing into the accommodation space 27, to flow toward the traction motors 30 without downward diffusion. The second lower cover 62 guides the wind to flow toward the material-handling motors 32 without downward diffusion. The third lower cover 63 guides the wind to flow toward the cooling fan 50 without downward diffusion. Heat generated in the control unit 34 of the motor controller 33 is discharged toward the accommodation space 27 by the fan 35.

The above-described embodiment has the following advantages.
(1) The battery 40 is arranged in the rear portion of the vehicle main body 21. The traction motors 30 and the material-handling motors 32 are arranged in the accommodation space 27, frontward from the battery 40, rearward from the front end of the vehicle main body 21, and frontward from the cooling fan 50. In such a forklift 10, the wind, drawn into the vehicle main body 21, flows toward the traction motors 30 and the material-handling motors 32 without being blocked by the battery 40. The cooling fan 50 discharges the wind, flowing from the front to the rear, rearward from the traction motors 30 and the material-handling motors 32. Thus, the wind, flowing inside the vehicle main body 21, is drawn into the cooling fan 50 without changing direction. This increases the speed of the wind as compared to when there is no cooling fan 50 or the flow direction of the wind is changed. When wind having an increased speed comes into contact with the traction motors 30, the material-handling motors 32, and the motor controller 33, the cooling efficiency of such heating elements is improved.
(2) The intake regulating plate 53 guides the wind toward the gap S. Thus, the amount of the wind drawn into the vehicle main body 21 is increased as compared to when there is no intake regulating plate 53. This improves the cooling efficiency of the traction motors 30, the material-handling motors 32, and the motor controller 33 using the wind as compared to when there is no intake regulating plate 53.
(3) The guide regulating plates 54 restrict upward diffusion of the wind drawn into the vehicle main body 21. Thus, inside the vehicle main body 21, the guide regulating plates 54 direct the wind to the traction motors 30 to cool the traction motors 30 and guide the wind toward the cooling fan 50. This improves the cooling efficiency of the traction motors 30, the material-handling motors 32, and the motor controller 33 using the wind as compared to when there is no guide regulating plates 54.
(4) The forklift 10 includes the intake regulating plate 53 and the guide regulating plates 54. Thus, the intake regulating plate 53 and the guide regulating plates 54 further improve the cooling efficiency of the traction motors 30, the material-handling motors 32, and the motor controller 33.
(5) The accommodation space 27 accommodates the traction motors 30 and the material-handling motors 32. The lower side of the accommodation space 27 is covered by the first lower cover 61, the second lower cover 62, and the third lower cover 63. The first to third lower covers 61 to 63 restrict downward diffusion of the wind flowing through the accommodation space 27. This avoids a decrease in the airflow rate of the wind due to the diffusion. This also avoids a decrease in the cooling efficiency of the traction motors 30, the material-handling motors 32, and the motor controller 33 using the wind.
(6) The first lower cover 61 extends from the front end of the vehicle main body 21 to the lower side of the traction motors 30. The first lower cover 61 guides the wind, drawn in from the front end of the vehicle main body 21, to the traction motors 30 while restricting downward diffusion of the wind. Thus, the first lower cover 61 improves the cooling efficiency of the traction motors 30.
(7) The material-handling motors 32 are arranged upward from the traction motors 30. The second lower cover 62 is inclined upward from the traction motors 30 toward the material-handling motors 32. The second lower cover 62 guides the wind to the material-handling motors 32 while restricting downward diffusion of the wind. Thus, the second lower cover 62 improves the cooling efficiency of the material-handling motors 32.
(8) The third lower cover 63 extends from the rear ends of the material-handling motors 32 to the cooling fan 50. The third lower cover 63 guides the wind toward the cooling fan 50 while restricting downward diffusion of the wind. Thus, the third lower cover 63 improves the air-blowing efficiency of the cooling fan 50.
(9) The cooling fan 50 is arranged downstream from the material-handling motors 32 in the flow direction F. The cooling fan 50 draws in the wind along the flow direction F. Thus, the cooling fan 50, drawing in the wind without pressure loss, increases the speed of the wind in a preferred manner.
(10) The motor controller 33 is arranged such that the fan 35 is directed to the accommodation space 27. Heat generated in the control unit 34 is discharged to the accommodation space 27 by the fan 35. Then, the heat, discharged to the accommodation space 27, is discharged out of the vehicle body 11 along with the wind. This improves the cooling efficiency of the control unit 34 as compared to when the fan 35 does not face the accommodation space 27.
(11) The traction motors 30 and the material-handling motors 32 are arranged between the cooling fan 50 and the front end of the vehicle main body 21 in the front-rear direction. The wind having an increased speed comes into contact with the traction motors 30 and the material-handling motors 32. Thus, the cooling fan 50 improves the cooling efficiency of the traction motors 30 and the material-handling motors 32.
(12) The forklift 10 includes the duct 38 inside the counterweight 25. The duct 38 allows air, drawn in by the cooling fan 50, to be discharged out of the vehicle body 11. Thus, the duct 38 avoids heat accumulation inside the vehicle body 11.
(13) The heat transfer member 39 transfers the heat of the battery 40 to the counterweight 25. Thus, the heat transfer member 39 restricts an excessive rise in the temperature of the battery 40.
(14) The heat transfer member 39 covers the duct forming portion 26 of the counterweight 25 from above. The duct 38 is defined by the duct forming portion 26 and the heat transfer member 39. The wind flowing through the duct 38 comes into contact with the heat transfer member 39. Thus, since the heat transfer member 39 is cooled with the wind, the battery 40 is cooled with the wind.
(15) The motor controller 33 is arranged upward from the accommodation space 27. Thus, the motor controller 33 does not impede the flow of the wind in the accommodation space 27. The fan 35 of the motor controller 33 faces the accommodation space 27. The fan 35 discharges the heat of the control unit 34 to the accommodation space 27. Thus, the motor controller 33 arranged at the suitable position allows for the cooling of the motor controller 33 in a preferred manner while improving the cooling efficiency of the traction motors 30 and the material-handling motors 32 using the wind.
(16) A mere addition of the cooling fan 50 improves the cooling efficiency of the traction motors 30, the material-handling motors 32, and the motor controller 33 using the wind. For example, unlike a case in which the traction motors 30, the material-handling motors 32, and the motor controller 33 are water-cooled, the forklift 10 does not need large-scale equipment such as a refrigerant pipe, a radiator fan, and a radiator. Thus, as compared to water cooling, the arrangement of the cooling fan 50 improves the cooling efficiency of the traction motors 30, the material-handling motors 32, and the motor controller 33 at lower cost.

The present embodiment may be modified as described below. The present embodiment and the following modifications can be combined if the combined modifications remain technically consistent with each other.

The fan 35 of the motor controller 33 does not need to face the accommodation space 27.

The motor controller 33 may include only the control unit 34 without the fan 35. In this case, the control unit 34 of the motor controller 33 preferably faces the accommodation space 27. With this structure, heat generated in the control unit 34 is discharged to a wind flowing in the accommodation space 27.

The positions of the first bottom portion 22a and the second bottom portion 22b in the vertical direction may be changed. The inclination of the second lower cover 62 may be changed in accordance with the positions of the first bottom portion 22a and the second bottom portion 22b in the vertical direction. When the first bottom portion 22a and the second bottom portion 22b are at the same position in the vertical direction, the second lower cover 62 extends horizontally between the first bottom portion 22a and the second bottom portion 22b. In contrast, when the first bottom portion 22a is arranged upward from the second bottom portion 22b, the second lower cover 62 is inclined downward from the first bottom portion 22a to the second bottom portion 22b.

When the second bottom portion 22b is located downward from the duct forming portion 26, the third lower cover 63 is arranged to be inclined upward from the second bottom portion 22b to the counterweight 25. In other words, the third lower cover 63 is inclined upward toward the cooling fan 50 as the third lower cover 63 extends from the front end to the rear end. In this case, the third lower cover 63 is an inclined portion located between the front end of the vehicle main body 21 and the cooling fan 50.

At least one of the first to third lower covers 61 to 63 may be omitted.

The lower side of the accommodation space 27 may be covered by a single lower cover from the front end of the vehicle main body 21 to the front end of the counterweight 25.

The forklift 10 only needs to include at least one of the intake regulating plate 53 and the guide regulating plates 54. The expression "at least one of the intake regulating plate 53 and the guide regulating plates 54" used in the present specification means only the intake regulating plate 53, only the guide regulating plates 54, or both the intake regulating plate 53 and the guide regulating plates 54.

The motor controller 33 may be arranged inside the accommodation space 27. For example, the motor controller 33 may be arranged between the traction motors 30 and the material-handling motors 32 in the front-rear direction. Alternatively, the motor controller 33 may be arranged between the material-handling motors 32 and the cooling fan 50 in the front-rear direction.

The positions of the traction motors 30 and the material-handling motors 32 in the front-rear direction may be swapped.

The industrial vehicle may be any type of vehicle other than the forklift 10.

## Claims

1. An industrial vehicle, comprising:
a vehicle main body into which a wind is drawn from a front;
a cabin arranged on the vehicle main body;
a material-handling device arranged in a front portion of the vehicle main body;
a material-handling motor arranged inside the vehicle main body, below the cabin;
a traction motor arranged inside the vehicle main body, below the cabin;
a motor controller arranged inside the vehicle main body, below the cabin, the motor controller controlling the material-handling motor and the traction motor;
a battery serving as a power source for the material-handling motor and the traction motor; and
a cooling fan arranged inside the vehicle main body, wherein
the battery is arranged rearward from the cabin in a rear portion of the vehicle main body,
the motor controller is arranged frontward from the battery,
the material-handling motor and the traction motor are arranged frontward from the cooling fan, and
the cooling fan discharges the wind, flowing from the front to a rear of the vehicle main body, to a rear of the material-handling motor and the traction motor.

2. The industrial vehicle according to claim 1, further comprising at least one of an intake regulating plate and a guide regulating plate, wherein
the intake regulating plate projects frontward from a front end of the vehicle main body and allows the wind to be drawn into the vehicle main body, and
the guide regulating plate is arranged inside the vehicle main body, below the cabin, and guides the wind toward the cooling fan.

3. The industrial vehicle according to claim 1 or 2, further comprising a lower cover, wherein
an accommodation space extending from a front end of the vehicle main body to the cooling fan is defined inside the vehicle main body,
the traction motor and the material-handling motor are accommodated in the accommodation space, and
the lower cover covers the accommodation space from below.

4. The industrial vehicle according to claim 3, wherein
the lower cover includes an inclined portion located between the front end of the vehicle main body and the cooling fan, and
the inclined portion is inclined upward toward the cooling fan as the inclined portion extends from a front to a rear.

5. The industrial vehicle according to claim 3 or 4, wherein
the motor controller includes:
a control unit that controls the material-handling motor and the traction motor; and
a fan that cools the control unit, and
the fan faces the accommodation space.
